# EUROPEAN PATENT APPLICATION

(11) **EP 2 333 649 A2**
(43) Date of publication of application: **15.06.2011**
(21) Application number: 10158125.4
(22) Date of filing: 29.03.2010
(51) Int. Cl.: G06F 3/044

(54) **Capacitive touch device structure**

(30) Priority: 09.12.2009 TW 098142039
(71) Applicant: J Touch Corporation, Taoyuan County (TW)
(72) Inventor: Yeh, Yu-Chou, TAOYUAN COUNTY (TW); Jan, Hsiao-Shun, TAOYUAN COUNTY (TW); Teng, Chieh-Jen, TAOYUAN COUNTY (TW)
(74) Representative: Chaillot, Geneviève

(57) **Abstract**

A capacitive touch device structure includes a first transparent substrate, a second transparent substrate, a picture layer at the periphery of a lower surface of the first transparent substrate, first and second transparent conductive thin films formed on corresponding surfaces of the two transparent substrates respectively, a plurality of first and second circuits, and an adhesive layer for laminating the first and second transparent substrates. After the corresponding surfaces of the capacitive touch device are attached, the first or second transparent conductive thin film and the first or second circuit are considered to be in the same plane, so as to achieve the effects of reducing the thickness of the capacitive touch device, improving the light transmittance effectively, minimizing the number of layers of the first or second transparent conductive thin film and the first or second circuit, simplifying the manufacturing process and improving the yield rate.

## Description

### BACKGROUND OF THE INVENTION

### 1. Field of the Invention

The present invention relates to a touch device, and more particularly to a capacitive touch device structure capable of reducing the thickness, improving the light transmittance, and simplifying the manufacturing process of a touch panel.

### 2. Description of the Related Art

Touch panel is generally divided into resistive, capacitive, ultrasonic, and optical (infrared) touch panel. Among these touch panels, the resistive touch panel is the most commonly used one, and the capacitive touch panel is the second commonly used one. Although the capacitive touch panel comes at a higher price, it has the advantages of high water resistance, scratch resistance and light transmittance as well as wide applicable temperature range. Therefore, the capacitive touch panel is introduced and used in the market of small touch panels as the technology matures.

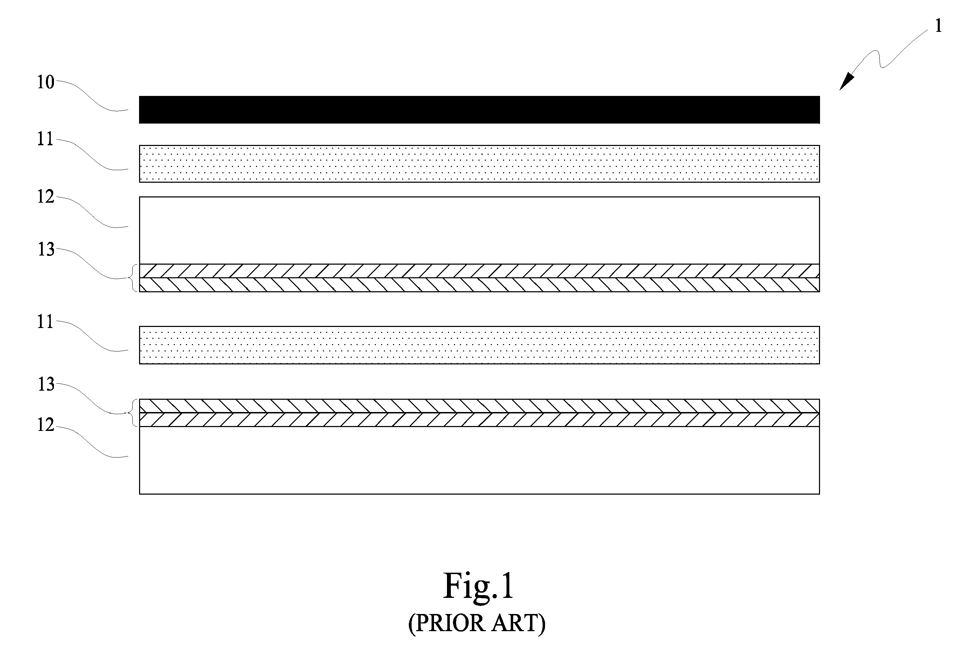

With reference to FIG. 1 for a schematic view of a conventional touch panel structure, the conventional touch panel 1 includes at least two PET substrates 12, two electrically conductive layers 13 disposed on a corresponding surface of the PET substrates 12 respectively, an optically clear adhesive 11 disposed between the electrically conductive layers 13 for laminating the two PET substrates 12 with each other, and the optically clear adhesive 11 disposed at another surface of any PET substrate 12 for adhering a protective layer 10. In FIG. 1, the electrically conductive layer 13 has a thickness composed of at least two layers, wherein one is a metal conducting wire layer, and the other one is a conductive electrode layer, and the upper and lower electrically conductive layers 13 are formed onto at least two PET substrates 12 respectively. With the optically clear adhesive 11 and the protective layer 10, the whole stack will become relatively thick, and thus the upper and lower electrically conductive layers 13 are formed on both corresponding surfaces of a glass substrate to reduce the thickness, or diamond sensing electrodes are manufactured on a single side of the substrate. However, it is necessary to use the optically clear adhesive 11 for the lamination as a protective layer or a decorative layer of a casing. As a result, the thickness of the touch panel still cannot be reduced effectively. Therefore, some manufacturers developed a method of reducing the thickness of a touch panel as disclosed in R.O.C. Publication No. M368846 entitled "Improved touch panel structure", and the structure comprises a substantially transparent substrate, a color frame formed at the periphery of a surface of the substrate, and a touch sensor disposed on the substrate and having an insulation effect, such that a signal line at the edge of the touch sensor can be installed precisely under the color frame. The touch sensor uses the alignment effect of a metal bridging structure to minimize the number of layers in the overall manufacturing process.

The touch sensor has a capacitive sensing layer, a barrier layer and a jumper electrical conducting layer The capacitive sensing layer includes a plurality of sensing units arranged along equidistant X-axis and Y-axis tracks on a substrate , wherein the sensing units arranged in an axis track are connected to each other, and the sensing units arranged in the other axis track are not connected to each other, and finally an insulating layer and the jumper electrical conducting layer are laid to electrically connect track sensing units arranged along each axis tracks. To achieve a uniform light transmittance, the aforementioned patent further comprises a substance disposed between X-axis and Y-axis sensing units and having decorative lines and made of the same material of the two axis sensing units, wherein an interval must be maintained between the decorative lines and the edge of each sensing unit, such that the decorative lines and the sensing units are not connected. Although this patented technology can reduce the number of layers and the thickness, the manufacture of the sensing electrode becomes very complicated.

Further, a "capacitive touch panel" as disclosed in R.O.C. Pat. Publication No. M355426 comprises a hard substrate and a patterned conductive film, wherein an upper surface of the hard substrate is a touch end of the touch panel, and a lower surface of the hard substrate includes at least one mask pattern, a viewable area and a plurality of conductor circuits, wherein the viewable area is enclosed by at least one mask pattern, and the conductor circuits are formed on the mask pattern and jointly extended to a side of an external periphery of the mask pattern. The patterned conductive film includes a plurality of electrode circuits corresponding to the range of the viewable area and connected to the conductor circuits respectively. The lower surface of the hard substrate is provided for laying wires for the touch panel structure, and the patterned electrically conductive layer is the same as disclosed in the aforementioned patent. In other words, the X-axis and Y-axis sensing electrodes are manufactured on a single surface of the substrate, and then an insulating layer is formed onto the sensing electrode, such that the insulating layer has a hollow portion disposed at a position opposite to at least one end of each sensing electrode, and finally a transparent conductive thin film is coated onto the insulating layer, and with the bridge conductive wire formed after the patternization process. Although the structure reduces the usage of substrates, the manufacturing process requires the steps of coating a plurality of films onto a single substrate as well as the etching process.

### SUMMARY OF THE INVENTION

In view of the shortcomings of the prior art, the inventor of the present invention based on years of experience in the related industry to conduct extensive researches and experiments, and finally developed a capacitive touch device structure in accordance with the present invention to overcome the shortcomings of the prior art.

Therefore, it is a primary objective of the present invention to overcome the aforementioned shortcoming and deficiency of the prior art by providing a capacitive touch device structure that can lower the overall thickness of a touch panel.

Another objective of the present invention is to provide a capacitive touch device structure that can simplify the manufacturing process for a touch panel.

Another objective of the present invention is to provide a capacitive touch device structure that can improve the light transmittance.

To achieve the foregoing objectives, the present invention provides a capacitive touch device structure comprising a first transparent substrate, a picture layer, a first transparent conductive thin film, a second transparent substrate, a second transparent conductive thin film, and an adhesive layer.

The first transparent conductive thin film is coated onto a lower surface of the first transparent substrate, wherein the first transparent conductive thin film includes a plurality of first sensing electrodes and a plurality of first circuits, and the first sensing electrodes are respectively and electrically coupled to the first circuits, and the picture layer is disposed between the periphery of a lower surface of the first transparent substrate and the first transparent conductive thin film, and the picture layer is a planar hollow frame structure, and the first circuits have a wiring area covered by an area range of the picture layer.

The second transparent conductive thin film is coated onto an upper surface of the second transparent substrate, wherein the second transparent conductive thin film includes a plurality of second sensing electrodes and a plurality of second circuits, and the second sensing electrodes are electrically coupled to the second circuits respectively, and the second circuits are disposed opposite to a cladding area of the picture layer on the first transparent substrate, and whose wiring area is covered by an area range of the picture layer, and the first sensing electrodes and the second sensing electrodes are intersected perpendicularly with each other.

After the first transparent substrate and the second transparent substrate are attached by an adhesive layer, the picture layer is covered at the periphery of the lower surface of the first transparent substrate, whose interior hollow area is the covering area of the first transparent conductive thin film, and the first circuits are installed within the range area of the picture layer, and the intersection of the picture layer and the first transparent conductive thin film is near the electric connecting positions of the first sensing electrodes and the first circuits, so that the first transparent conductive thin film and the first circuits are considered to be in the same plane, and the thickness can be reduced effectively. In addition, the second transparent conductive thin film, the second circuits and the second sensing electrodes of the second transparent substrate are installed in the same way as those of the first transparent substrate, such that the overall thickness of the capacitive touch device can be reduced. In the meantime, the present invention can simplify the manufacturing process of the prior art that requires a complicated sequential processes.

### BRIEF DESCRIPTION OF THE DRAWINGS

FIG. 1 is a schematic view of a conventional touch panel;
FIG. 2 is an exploded view of a touch panel in accordance with a preferred embodiment of the present invention;
FIG. 3 is a cross-sectional view of an assembled touch panel in accordance with a preferred embodiment of the present invention;
FIG. 4A is a first schematic view of a circuit in accordance with a preferred embodiment of the present invention;
FIG. 4B is a second schematic view of a circuit in accordance with a preferred embodiment of the present invention;
FIG. 5 is an exploded view of a touch panel in accordance with another preferred embodiment of the present invention;
FIG. 6 is a cross-sectional view of an assembled touch panel in accordance with another preferred embodiment of the present invention.

### DETAILED DESCRIPTION OF THE PREFERRED EMBODIMENTS

The technical characteristics of the present invention will become apparent with the detailed description of the preferred embodiments and the illustration of the related drawings.

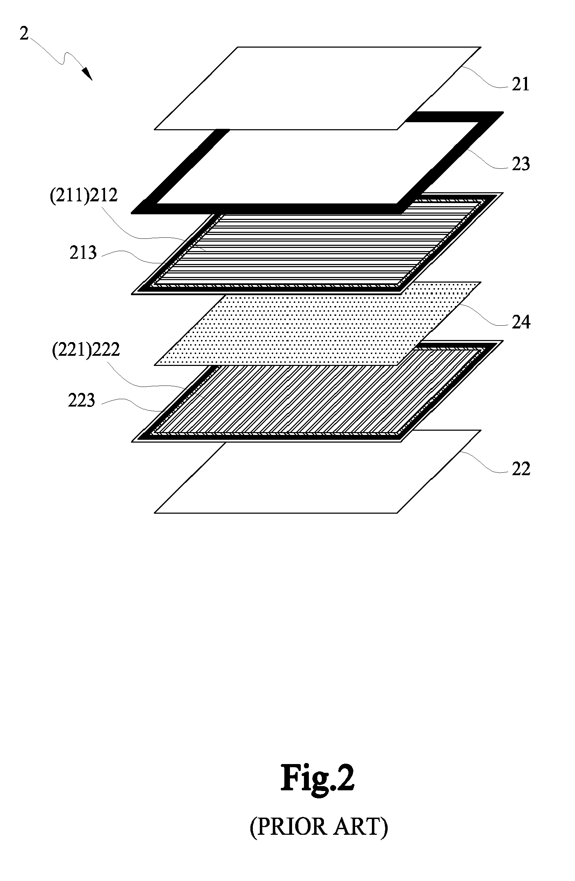

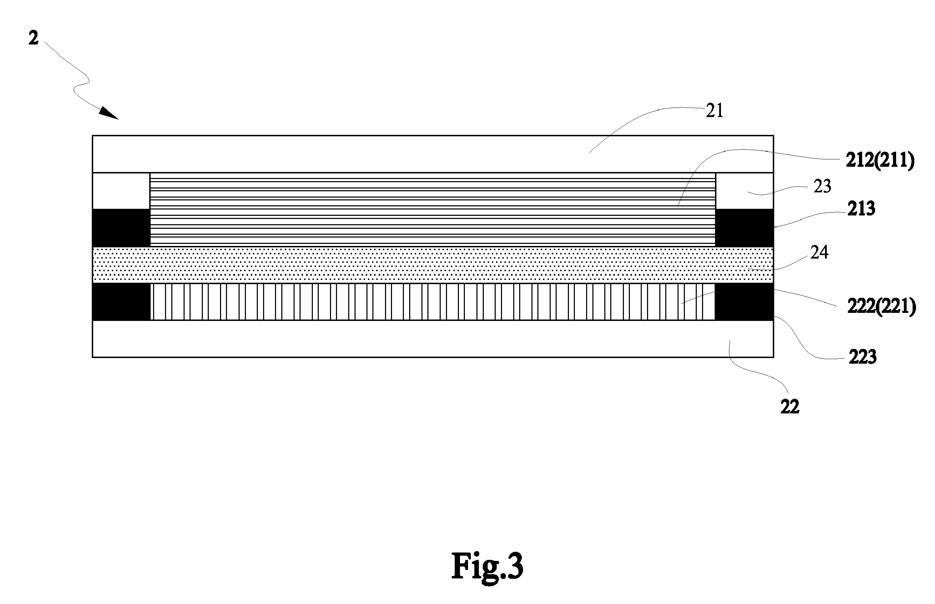

With reference to FIGS. 2 and 3 for an exploded view and a cross-sectional view of a capacitive touch device structure in accordance with a preferred embodiment of the present invention, the capacitive touch device structure includes a capacitive touch device 2 comprising a first transparent substrate 21, a first transparent conductive thin film 211, a second transparent substrate 22, a second transparent conductive thin film 221, a picture layer 23 and an adhesive layer 24 for laminating the transparent substrates 21, 22.

The first transparent substrate 21 is composed of a group of transparent plate made of a material selected from glass, polyethylene terephthalate (PET), polycarbonate (PC), polyethylene (PE), polyvinyl Chloride (PVC), polypropylene (PP), polystyrene (PS), polymethylmethacrylate (PMMA), or cycloolefin coplymer (COC).

The picture layer 23 is a planar hollow frame structure composed of ink, and disposed at the periphery of a lower surface of the first transparent substrate 21.

The first transparent conductive thin film 211 is coated onto a lower surface of the first transparent substrate 21 and disposed on an internal side of a range enclosed by the picture layer 23, and made of an impurity-doped oxide selected from the collection of indium tin oxide (ITO), indium zinc oxide (IZO), Al-doped ZnO (AZO) and antimony tin oxide (ATO).

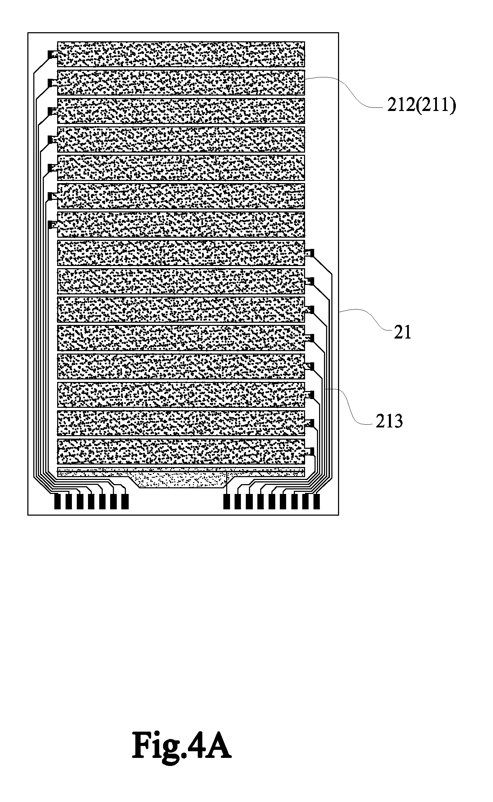

With reference to FIG. 4A, the first transparent conductive thin film 211 includes a plurality of first sensing electrodes 212 disposed in a horizontal direction (or X-axis direction) or a vertical direction (or Y-axis direction) on the first transparent conductive thin film 211.

A plurality of first circuits 213 are made of a metal such as chromium, aluminum, silver, molybdenum, copper and gold or any one of their alloys, and the plurality of first circuits 213 are electrically coupled to the first sensing electrodes 212 respectively, and the first circuits 213 have a wiring area covered within an area range of the picture layer 23.

The second transparent substrate 22 is made of a transparent sheet material group selected from glass, polyethylene terephthalate (PET), polycarbonate (PC), polyethylene (PE), polyvinyl Chloride (PVC), polypropylene (PP), polystyrene (PS), polymethylmethacrylate (PMMA), cycloolefin coplymer (COC).

The second transparent conductive thin film 221 is coated onto an upper surface of the second transparent substrate 22 and made of an impurity-doped oxide selected from indium tin oxide (ITO), indium zinc oxide (IZO), Al-doped ZnO (AZO) or antimony tin oxide (ATO).

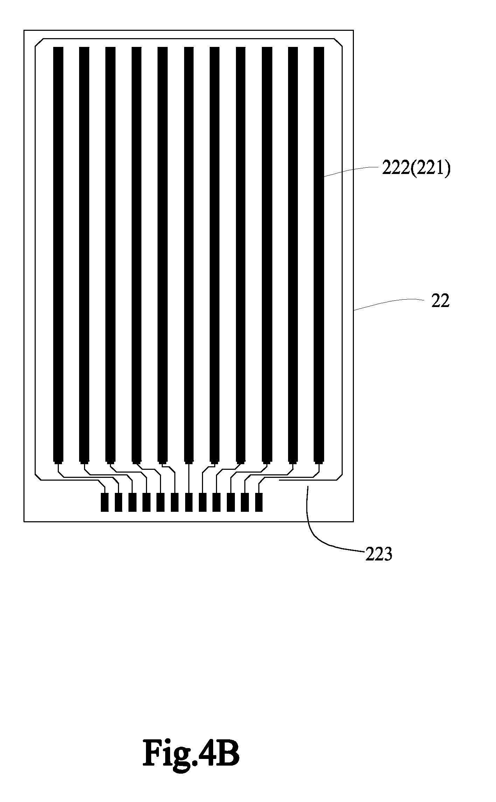

With reference to FIG. 4B, the second transparent conductive thin film 221 is coated in a horizontal direction (or X-axis direction) or a vertical direction (or Y-axis direction) and includes a plurality of second sensing electrodes 222 disposed on the second transparent conductive thin film 221, and a plurality of second circuits 223 made of a metal such as chromium, aluminum, silver, molybdenum, copper and gold or any one of their alloys, and the plurality of second circuits 223 are electrically coupled to the second sensing electrodes 222 respectively.

The adhesive layer 24 is mainly composed of an optically clear adhesive (OCA), and disposed between the first circuit 213 of the first transparent substrate 21 and the second circuit 223 of the second transparent substrate 22, for laminating the lower surface of the first transparent substrate 21 with the upper surface of the second transparent substrate 22. It is noteworthy to point out that after the first transparent substrate 21 and the second transparent substrate 22 are laminated, the second circuits 223 are arranged opposite to a cladding area of the picture layer 23 on the first transparent substrate 21, and whose wiring area is covered within the area range of the picture layer 23. In the meantime, the first sensing electrodes 212 and the second sensing electrodes 222 are intersected perpendicularly with each other. In other words, if the first sensing electrodes 212 are arranged in the horizontal direction (X-axis direction), then the second sensing electrodes 222 will be arranged in the vertical direction (Y-axis direction). On the other hand, if the first sensing electrodes 212 are arranged in the vertical direction (Y-axis direction), then the second sensing electrodes 222 will be arranged in the horizontal direction (X-axis direction).

With the aforementioned method, after the adhesive layer 24 is used for laminating the first transparent substrate 21 and the second transparent substrate 22 with each other, the interior of the picture layer 23 is a hollow area which is a covering area of the first transparent conductive thin film 211, and the first circuits 213 are installed within the area range of the picture layer 23, so that the intersection of the picture layer 23 and the first transparent conductive thin film 211 is near the electric connecting positions of the first sensing electrodes 212 and the first circuits 213, and the first transparent conductive thin film 211, the first sensing electrodes 212 and the first circuits 213 can be considered to be in the same plane, and the picture layer 23, the first sensing electrode 212 and the first circuit 213 are formed in the same substrate (which is the first transparent substrate 21 in this embodiment), and thus the thickness can be reduced effectively. In addition, the second transparent conductive thin film 221, the second sensing electrodes 212 and the second circuits 223 of the second transparent substrate 22 are installed in the same way as those of the first transparent substrate 21, so that the overall thickness of the capacitive touch device 2 can be reduced, and the light transmittance of the capacitive touch device 2 can be improved. In the meantime, the present invention can simplify the manufacturing process of the prior art that requires complicated sequential processes, and can reduce the laminating process to improve the yield rate.

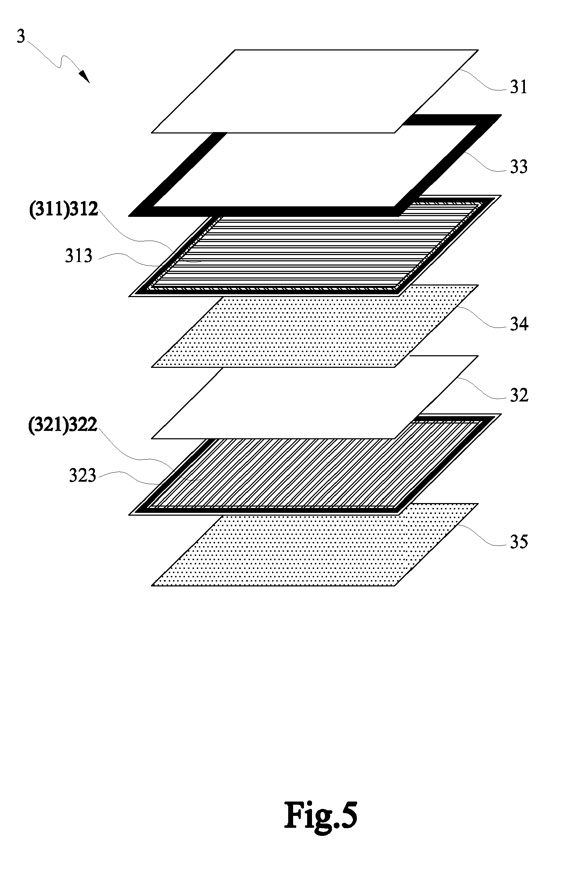

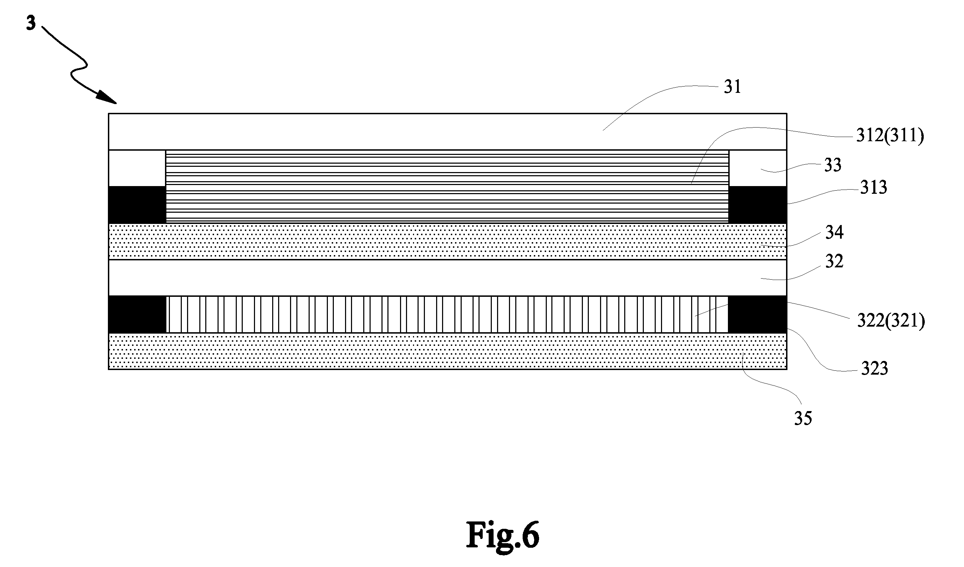

With reference to FIGS. 5 and 6 for an exploded view and a cross-sectional view of a capacitive touch panel in accordance with another preferred embodiment of the present invention respectively, the capacitive touch device structure includes a capacitive touch device 3, comprising a third transparent substrate 31, a third transparent conductive thin film 311, a fourth transparent substrate 32, a fourth transparent conductive thin film 321, a picture layer 33, an adhesive layer 34 for laminating the transparent substrates and a protective layer 35.

The third transparent substrate 31 is made of transparent sheet material group such as glass, polyethylene terephthalate (PET), polycarbonate (PC), polyethylene (PE), polyvinyl Chloride (PVC), polypropylene (PP), polystyrene (PS), polymethylmethacrylate (PMMA) or cycloolefin coplymer (COC).

The picture layer 33 is a planar hollow frame structure composed of ink and disposed at the periphery of a lower surface of the third transparent substrate 31.

The third transparent conductive thin film 311 is passed through the picture layer 33 disposed on a lower surface of the third transparent substrate 31, and made of an impurity-doped oxide such as indium tin oxide (ITO), indium zinc oxide (IZO), Al-doped ZnO (AZO) or antimony tin oxide (ATO).

The third transparent conductive thin film 311 includes a plurality of third sensing electrodes 312 coated in a horizontal direction (or X-axis direction) or a vertical direction (or Y-axis direction), and the third transparent conductive thin film 311 are coated onto a lower surface of the third transparent substrate 31.

The plurality of third circuits 313 are installed on the picture layer 33 and electrically coupled to the third sensing electrodes 312 respectively, and the third circuits 313 has a wiring area covered within the area range of the picture layer 33, and is made of a metal such as chromium, aluminum, silver, molybdenum, copper and gold or any one of their alloys.

The fourth transparent substrate 32 is made of a transparent sheet material group selected from glass, polyethylene terephthalate (PET), polycarbonate (PC), polyethylene (PE), polyvinyl Chloride (PVC), polypropylene (PP), polystyrene (PS), polymethylmethacrylate (PMMA), or cycloolefin coplymer (COC).

The fourth transparent conductive thin film 321 is coated onto a lower surface of the fourth transparent substrate 32 and made of an impurity-doped oxide such as indium tin oxide (ITO), indium zinc oxide (IZO), Al-doped ZnO (AZO) or antimony tin oxide (ATO).

The fourth transparent conductive thin film 321 includes a plurality of fourth sensing electrodes 322, and the fourth transparent conductive thin film 321 is coated onto a lower surface of the fourth transparent substrate 32, and the plurality of the fourth circuit 323 are disposed at the periphery of the lower surface of the fourth transparent substrate 32, and electrically coupled to the fourth sensing electrodes 322 respectively, and made of a metal such as chromium, aluminum, silver, molybdenum, copper and gold or any one of their alloys.

To protect the fourth circuit 323 from being damaged during transportations or at a later-stage manufacturing process, a protective layer 35 is coated onto the fourth circuit, and the protective layer 35 is a single-sided optically clear adhesive (OCA).

The adhesive layer 34 mainly composed of an optically clear adhesive (OCA) is disposed between the third circuit 313 of the third transparent substrate 31 and the upper surface of the fourth transparent substrate 32 for laminating a lower surface of the third transparent substrate 31 with an upper surface of the fourth transparent substrate 32. It is noteworthy to point out that after the third transparent substrate 31 and the fourth transparent substrate 32 are laminated with each other, the fourth circuits 323 are disposed opposite to a cladding area of the picture layer 33 on the third transparent substrate 31, and whose wiring area is covered within an area range of the picture layer 33. In the meantime, the third sensing electrodes 312 and the fourth sensing electrodes 322 are intersected perpendicularly with each other. In other words, if the third sensing electrodes 312 are arranged in a horizontal direction (X-axis direction), then the fourth sensing electrodes 322 will be arranged in a vertical direction (Y-axis direction). On the other hand, if the third sensing electrodes 312 are arranged in the vertical direction (Y-axis direction), then the fourth sensing electrodes 322 will be arranged in the horizontal direction (X-axis direction).

In summation of the description above, the present invention improves over the prior art and complies with patent application requirements, and thus is duly filed for the patent application.

While the invention has been described by device of specific embodiments, numerous modifications and variations could be made thereto by those generally skilled in the art without departing from the scope and spirit of the invention set forth in the claims.

## Claims

1. A capacitive touch device structure, comprising:
a first transparent substrate;
a picture layer, being an a planar hollow frame structure, and formed at the periphery of a lower surface of the first transparent substrate;
a first transparent conductive thin film, coated onto a lower surface of the first transparent substrate and disposed on an internal side of a range enclosed by the picture layer, and having a plurality of first sensing electrodes;
a plurality of first circuits, installed at positions corresponding to the picture layer, and disposed on the picture layer, and respectively and electrically coupled to the first sensing electrodes;
a second transparent substrate;
a second transparent conductive thin film, coated onto an upper surface of the second transparent substrate, and having a plurality of second sensing electrodes;
a plurality of second circuits, installed at the periphery of an upper surface of the second transparent substrate, and electrically and respectively coupled to the second sensing electrodes; and
an adhesive layer, for laminating the lower surface of the first transparent substrate with the upper surface of the second transparent substrate.

2. The capacitive touch device structure of claim 1, wherein the first sensing electrodes and the second sensing electrodes are intersected perpendicularly with each other.

3. The capacitive touch device structure of claim 1, wherein the first circuits have a wiring area covered within an area range of the picture layer, and the second circuits are installed opposite to a cladding area of the picture layer of the first transparent substrate, and a wiring area of the second circuits is covered within the area range of the picture layer.

4. The capacitive touch device structure of claim 1, wherein the first transparent substrate and the second transparent substrate are comprised of a transparent sheet material group selected the collection of glass, polyethylene terephthalate (PET), polycarbonate (PC), polyethylene (PE), polyvinyl Chloride (PVC), polypropylene (PP), polystyrene (PS), polymethylmethacrylate (PMMA) and cycloolefin coplymer (COC).

5. The capacitive touch device structure of claim 1, wherein the picture layer is composed of ink.

6. The capacitive touch device structure of claim 1, wherein the adhesive layer is an optically clear adhesive (OCA).

7. The capacitive touch device structure of claim 1, wherein the first transparent conductive thin film and the second transparent conductive thin film are impurity-doped oxides made of a material selected from the collection of indium tin oxide (ITO), indium zinc oxide (IZO), Al-doped ZnO (AZO) and antimony tin oxide (ATO).

8. The capacitive touch device structure of claim 1, wherein the adhesive layer is disposed between the first circuits and the second circuits.

9. A capacitive touch device structure, comprising:
a third transparent substrate;
a picture layer, being an a planar hollow frame structure, and formed at the periphery of a lower surface of the third transparent substrate;
a third transparent conductive thin film, passed through the picture layer and disposed on a lower surface of the third transparent substrate, and having a plurality of third sensing electrodes;
a plurality of third circuits, installed onto the picture layer, and respectively and electrically coupled to the third sensing electrodes;
a fourth transparent substrate;
a fourth transparent conductive thin film, coated onto a lower surface of the fourth transparent substrate, and having a plurality of fourth sensing electrodes;
a plurality of fourth circuits, installed at the periphery of a lower surface of the fourth transparent substrate, and respectively and electrically coupled to the fourth sensing electrodes; and
an adhesive layer, for laminating the lower surface of the third transparent substrate with the upper surface of the fourth transparent substrate.

10. The capacitive touch device structure of claim 9, wherein the third sensing electrodes and the fourth sensing electrodes are intersected perpendicularly with each other.

11. The capacitive touch device structure of claim 9, wherein the third circuits has a wiring area covered within an area range of the picture layer, and the fourth circuits are installed opposite to a cladding area of the picture layer of the third transparent substrate, and whose wiring area is covered within the area range of the picture layer.

12. The capacitive touch device structure of claim 9, wherein the third transparent substrate and the fourth transparent substrate are comprised of a group of transparent sheets made of a material selected from the collection of polyethylene terephthalate (PET), polycarbonate (PC), polyethylene (PE), polyvinyl Chloride (PVC), polypropylene (PP), polystyrene (PS), polymethylmethacrylate (PMMA) and cycloolefin coplymer (COC).

13. The capacitive touch device structure of claim 9, wherein the picture layer is composed of ink.

14. The capacitive touch device structure of claim 9, wherein the adhesive layer is an optically clear adhesive (OCA).

15. The capacitive touch device structure of claim 9, wherein the adhesive layer is disposed between the third circuits and an upper surface of the fourth substrate.

16. The capacitive touch device structure of claim 9, wherein the fourth circuit further comprises a protective layer for protecting the circuits.

17. The capacitive touch device structure of claim 16, wherein the protective layer is a single-sided optically clear adhesive (OCA).

18. The capacitive touch device structure of claim 9, wherein the third transparent conductive thin film and the fourth transparent conductive thin film are made of an impurity-doped oxide selected from the collection of indium tin oxide (ITO), indium zinc oxide (IZO), Al-doped ZnO (AZO) and antimony tin oxide (ATO).
